# FASCICULE DE BREVET EUROPEEN

(11) **EP 1 262 456 B1**
(45) Date de publication et mention de la délivrance du brevet: **14.03.2007**
(21) Numéro de dépôt: 02291213.3
(22) Date de dépôt: 16.05.2002
(51) Int. Cl.: C01B 33/18, C03C 1/02, C03B 37/014

(54) **Procédé de fabrication d'une poudre de silice dopée au fluor**
Verfahren zur Herstellung eines Fluor-dotierten Kieselsäurepulvers
Process for preparing a fluorine-doped silica pulver

(30) Priorité: 31.05.2001 FR 0107155
(43) Date de publication de la demande: 04.12.2002
(73) Titulaire: Draka Comteq B.V., 1018 TX Amsterdam (NL)
(72) Inventeur: Jourdier, Pierryle, 75008 Paris (FR); Campion, Jean-Florent, 78700 Conflans St. Honorine (FR); Saugrain, Jean-Maxime, 78110 Le Vesinet (FR); Lavallade, Christelle, Hickory, N 28601 (US); Wane Nguila, Claire, 75019 Paris (FR)
(74) Mandataire: Blokland, Arie

(56) Documents cités:
- EP-A- 0 281 282
- EP-A- 0 578 553
- EP-A- 0 629 587
- US-A- 3 535 890
- US-A- 5 064 796
- TIMOKHIN A R ET AL: "CHEMICAL REACTION OF AMMONIUM BIFLUORIDE WITH QUARTZ GLASS" GLASS AND CERAMICS, vol. 42, no. 5-6, mai 1985 (1985-05), pages 267-269, XP002188919

## Description

L'invention porte sur un procédé de fabrication d'une poudre de silice dopée au fluor, cette silice dopée étant destinée à la réalisation de préformes de fibre optique.

Le dopage est une opération qui consiste à incorporer dans un matériau des atomes ou molécules dans le but d'en modifier les propriétés. Par exemple dans le domaine des fibres optiques, on incorpore des dopants afin de modifier l'indice de réfraction de la silice. Le dopant peut alors être le germanium, si l'on souhaite augmenter l'indice de réfraction de la silice, ou le fluor, si l'on souhaite au contraire abaisser l'indice.

La silice utilisée peut être une silice naturelle ou une silice synthétique. Cependant, la silice synthétique est le plus souvent utilisée dans le domaine des fibres optiques. La silice synthétique est une silice obtenue par synthèse chimique, par exemple par oxydation en présence de chaleur d'un gaz précurseur de la silice, tel que le tétrachlorure de silicium SiCl₄. Cette réaction conduit à une poudre présentant une grande pureté et une granulométrie très fine, c'est à dire de taille comprise entre 0,1 et 100nm, et de ce fait une surface spécifique élevée. Une telle poudre de silice est dénommée suie.

La suie de silice peut être utilisée par exemple pour fabriquer une préforme par la méthode VAD (« Vapor Axial Deposition ») ou OVD (« Outside Vapor Deposition »).

Par ailleurs, le document JP 62252335 décrit un procédé de fabrication de préforme dans lequel un composé du silicium est hydrolysé en présence d'un oxyfluorure de silicium, ce qui conduit à un dépôt de suies de silice fluorée qui sont ensuite vitrifiées.

Ces méthodes sont bien connues de l'homme de l'art du domaine des fibres optiques, et ne seront pas décrites plus en détail ici.

La suie de silice peut également être transformée selon le procédé décrit dans le document EP 0 578 553. Les grains de silice obtenus peuvent alors être déposés et vitrifiés pour accroître le diamètre de préformes primaires fabriquées par le procédé MCVD (acronyme anglais pour « Modified Chemical Vapor Deposition »).

Pour la fabrication de ces grains de silice, les particules de suie sont agglomérées par un procédé sol-gel pour former des granulés, puis ces granulés sont densifiés par un chauffage qui permet d'éliminer la porosité qui existe entre les différentes particules qui les composent, de sorte que les grains obtenus soient denses. Ces grains ont en général une taille supérieure au micron. On appelle granulé de silice une particule poreuse de silice à un stade intermédiaire de fabrication des grains de silice densifiés.

Il est possible d'effectuer l'opération de densification des granulés sous une atmosphère contenant un gaz précurseur du dopant souhaité. Ainsi, pour effectuer la fluoration des granulés de silice, on effectue la densification sous une atmosphère contenant un gaz fluoré tel que l'hexafluorure de soufre SF₆ ou le tétrafluorure de silicium SiF₄. Les granulés de silice sont disposés dans un creuset que l'on place dans un four pour le porter à la température permettant d'effectuer la densification, le four étant alimenté en gaz précurseur du dopant souhaité. Le dopage se produit par diffusion et réaction des molécules de dopant dans les granulés de silice, ce qui conduit à la formation de molécules complexes du type SiO₂₋ₓF₂ₓ. Le procédé est réalisé à haute température, à savoir autour de 1400°C.

Un dispositif alternatif permettant de densifier en présence d'un gaz fluoré des granulés en mouvement est décrit dans FR 2 749 005.

Ces procédés posent un certain nombre de problèmes.

Leur premier inconvénient réside dans l'agressivité des gaz fluorés. En effet, la forte corrosivité des gaz fluorés utilisés à température élevée entraîne une corrosion massive des fours, ce qui entraîne des coûts importants de maintenance. Un autre problème est la manipulation de ces gaz et le traitement ou la récupération qu'impose leur toxicité. Enfin, ces gaz ont un coût non négligeable en particulier le SiF₄.

Leur deuxième inconvénient réside dans l'inhomogénéité du dopage ainsi réalisé, inhomogénéité liée à la diffusion du réactif fluoré au sein de la poudre à traiter, principalement dans le cas de poudre disposée dans des creusets.

Le but de la présente invention consiste alors à proposer un procédé de fabrication de poudre de grains denses de silice dopée au fluor qui permette de réduire considérablement la corrosion des équipements et qui ne présente pas les inconvénients cités.
La présente invention a donc comme objet un procédé de fabrication d'une poudre de silice dopée au fluor et destinée à la réalisation de préformes de fibre optique, caractérisé par le fait que
- on mélange avec un composé fluoré solide des granulés de silice ayant une surface spécifique supérieure à 30 m²/g ;
- on effectue une décomposition thermique dudit composé fluoré solide ;
- on effectue une densification des granulés de silice dopés obtenus, pour aboutir à des grains de silice dopés.

Les granulés de silice sont mélangés avec la quantité souhaitée de composé fluoré solide et introduit dans un récipient adapté. Selon un mode de réalisation, le mélange de granulés de silice et de composé fluoré solide contient de 1 à 30%, en particulier de 2 à 12% de composé fluoré solide.

De préférence, on utilise un creuset en matériau tel que le quartz, résistant au fluor à la température de traitement.

Le four utilisé pour le procédé peut être un four rotatif horizontal en quartz, qui présente l'intérêt supplémentaire de la possibilité de travailler en continu. Un four statique avec un réacteur en quartz peut également être utilisé. Il peut être disposé en horizontal ou vertical, mais de préférence, il est vertical. Cela présente l'avantage de minimiser la surface d'échange entre la poudre et l'atmosphère et donc l'évaporation de SiF₄. Dans tous les cas, le four est maintenu sous balayage de gaz inerte tel que l'hélium.

De préférence, on utilise des granulés de silice synthétique présentant une surface spécifique comprise entre 30 m²/g et 200 m²/g. Il est supposé que l'agent fluorant dégagé attaque préférentiellement les sites OH de la silice. Le nombre de ces sites dépend de la surface spécifique de la silice. Ainsi, on peut s'attendre à ce qu'une silice très finement divisée permette un dopage au fluor plus poussé. Ainsi, lorsque l'on souhaite obtenir une silice dopée au fluor, il est préférable d'utiliser des granulés de silice à surface spécifique élevée. Une surface spécifique supérieure à 30 m²/g est donc avantageuse.

Selon un mode de réalisation, le composé fluoré solide est le bifluorure d'ammonium. Cependant, il est également envisageable d'utiliser d'autres composés fluorés solides instables thermiquement.

Par ailleurs, le procédé est conduit de préférence à température modérée, à savoir inférieure à 1450°C, et de préférence entre 250 et 600°C. De préférence, la température de décomposition est inférieure ou égale à 600°C, en particulier, elle est inférieure ou égale à 425°C. En effet, le composé fluoré utilisé se décompose à température modérée, à savoir inférieure à 1450°C, de préférence inférieure à 600°C. Il s'avère que même à 250°C, la diffusion du réactif fluoré dans les granulés se déroule rapidement. La durée de maintien à la température de décomposition peut être inférieure à une heure et, de préférence, elle est de 15 à 60 minutes.

Selon un mode de réalisation, on maintient le mélange à la température de décomposition pendant une durée de 15 à 60 minutes.

L'étape de densification en elle-même est connue. Un four classique, par exemple en graphite, peut être utilisé, ce qui constitue un avantage complémentaire du procédé selon l'invention. Le traitement de densification est de préférence également réalisé sous atmosphère inerte.

Selon un mode de réalisation, le procédé est continu.

Le premier avantage du procédé selon l'invention est que le dégagement de composés potentiellement corrosifs a lieu à température modérée, ce qui réduit considérablement l'usure des équipements.

Le deuxième avantage du procédé selon l'invention est que le dégagement de l'agent fluorant in situ permet d'assurer l'homogénéité de l'incorporation du fluor dans les granulés de silice.

L'invention sera illustrée plus en détail par les exemples suivants.

### Fluoration

### EXEMPLE 1

Dans un creuset en quartz de 50mm de diamètre et d'une hauteur de 144,5mm, on introduit 94g de granulés de silice synthétique ayant une surface spécifique de 50 m²/g et 6g de bifluorure d'ammonium (6%). Le creuset est introduit dans un réacteur en quartz placé dans un four vertical. Le mélange est alors chauffé en 20 minutes à 250°C sous balayage d'hélium, puis la température est maintenue pendant 15 minutes. Ensuite, on laisse refroidir à température ambiante (durée 150 minutes).

Un échantillon est ensuite mis en solution par frittage alcalin et le fluor est dosé par ionométrie. Les résultats obtenus sont portés dans le tableau 1.

### EXEMPLE 2

Dans un creuset identique à celui de l'exemple 1, on introduit 91g de granulés de silice synthétique identiques à ceux de l'exemple 1 et 9g de bifluorure d'ammonium (9%). Le creuset est introduit dans un réacteur en quartz placé dans un four vertical. Le mélange est alors chauffé en 30 minutes à 425°C sous balayage d'hélium, puis la température est maintenue pendant 15 minutes. Ensuite, on laisse refroidir à température ambiante (durée 150 minutes).

Un échantillon est dosé comme à l'exemple 1. Les résultats obtenus sont portés dans le tableau 1.

### EXEMPLE 3

Dans un creuset identique à celui de l'exemple 1, on introduit 92g de granulés de silice synthétique identiques à ceux de l'exemple 1 et 9g de bifluorure d'ammonium (9%). Le creuset est introduit dans un réacteur en quartz placé dans un four vertical. Le mélange est alors chauffé en 75 minutes à 600°C sous balayage d'hélium, puis la température est maintenue pendant 60 minutes. Ensuite, on laisse refroidir à température ambiante (durée 150 minutes).

Un échantillon est dosé comme à l'exemple 1. Les résultats obtenus sont portés dans le tableau 1.

### EXEMPLE 4

Dans un creuset identique à celui de l'exemple 1, on introduit 88g de granulés de silice synthétique identiques à ceux de l'exemple 1 et 12g de bifluorure d'ammonium (12%). Le creuset est introduit dans un réacteur en quartz placé dans un four vertical. Le mélange est alors chauffé en 75 minutes à 600°C sous balayage d'hélium, puis la température est maintenue pendant 15 minutes. Ensuite, on laisse refroidir à température ambiante (durée 150 minutes).

Un échantillon est dosé comme à l'exemple 1. Les résultats obtenus sont portés dans le tableau 1.

### EXEMPLE 5

Dans un creuset identique à celui de l'exemple 1, on introduit 94g de granulés de silice synthétique identiques à ceux de l'exemple 1 et 6g de bifluorure d'ammonium (6%). Le creuset est introduit dans un réacteur en quartz placé dans un four vertical. Le mélange est alors chauffé en 75 minutes à 600°C sous balayage d'hélium, puis la température est maintenue pendant 15 minutes. Ensuite, on laisse refroidir à température ambiante (durée 150 minutes).

Un échantillon est dosé comme à l'exemple 1. Les résultats obtenus sont portés dans le tableau 1.

### EXEMPLE 6

Dans un creuset fabriqué à partir d'un tube de quartz d'un diamètre de 46 mm, tronqué et fermé à plat à chaque extrémité, on pèse 56,40g de granulés de silice synthétique identiques à ceux de l'exemple 1 et 3,60g de bifluorure d'ammonium (6%). Le mélange est introduit dans un réacteur en quartz placé dans un four horizontal. Le mélange est alors chauffé en 75 minutes à 600°C sous balayage d'hélium puis la température est maintenue pendant 15 minutes. Ensuite, on laisse refroidir à température ambiante.

Un échantillon est dosé comme indiqué à l'exemple 1. Les résultats sont portés dans le tableau 1.

### EXEMPLE 7

Dans un creuset identique à celui de l'exemple 6, on pèse 58,56g de granulés de silice synthétique identiques à ceux de l'exemple 1 et 1,44g de bifluorure d'ammonium (2,4%). Le mélange est introduit dans un réacteur en quartz placé dans un four horizontal. Le mélange est alors chauffé en 75 minutes à 600°C sous balayage d'hélium puis la température est maintenue pendant 60 minutes. Ensuite, on laisse refroidir à température ambiante.

Un échantillon est dosé comme indiqué à l'exemple 1. Les résultats sont portés dans le tableau 1.

### EXEMPLE 8

Dans un creuset identique à celui de l'exemple 6, on pèse 57,48g de granulés de silice synthétique identiques à ceux de l'exemple 1 et 2,52g de bifluorure d'ammonium (4,2%). Le mélange est introduit dans un réacteur en quartz placé dans un four horizontal. Le mélange est alors chauffé en 30 minutes à 425°C sous balayage d'hélium puis la température est maintenue pendant 37,5 minutes. Ensuite, on laisse refroidir à température ambiante.

Un échantillon est dosé comme indiqué à l'exemple 1. Les résultats sont portés dans le tableau 1.

### EXEMPLE 9

Dans un creuset identique à celui de l'exemple 6, on pèse 56,40g de granulés de silice synthétique identiques à ceux de l'exemple 1 et 3,60g de bifluorure d'ammonium (6%). Le mélange est introduit dans un réacteur en quartz placé dans un four horizontal. Le mélange est alors chauffé en 20 minutes à 250°C sous balayage d'hélium puis la température est maintenue pendant 60 minutes. Ensuite, on laisse refroidir à température ambiante.

Un échantillon est dosé comme indiqué à l'exemple 1. Les résultats sont portés dans le tableau 1.

### EXEMPLE 10

Dans un creuset identique à celui de l'exemple 6, on pèse 58,56g de granulés de silice synthétique identiques à ceux de l'exemple 1 et 1,44g de bifluorure d'ammonium (2,4%). Le mélange est introduit dans un réacteur en quartz placé dans un four horizontal. Le mélange est alors chauffé en 20 minutes à 250°C sous balayage d'hélium puis la température est maintenue pendant 15 minutes. Ensuite, on laisse refroidir à température ambiante.

Un échantillon est dosé comme indiqué à l'exemple 1. Les résultats sont portés dans le tableau 1.

**Tableau 1 : Fluoration**

| Exemple | Température [°C] | Durée [min] | NH₄F,HF introduit [%] | Fluor incorporé [ppm] |
|---|---|---|---|---|
| 1 | 250 | 15 | 6 | 19500 |
| 2 | 425 | 15 | 9 | 11000 |
| 3 | 600 | 60 | 9 | 9800 |
| 4 | 600 | 15 | 12 | 13500 |
| 5 | 600 | 15 | 6 | 11400 |
| 6 | 600 | 15 | 6 | 8100 |
| 7 | 600 | 60 | 2,4 | 5500 |
| 8 | 425 | 37,5 | 4,2 | 7390 |
| 9 | 250 | 60 | 6 | 8900 |
| 10 | 250 | 15 | 2,4 | 7600 |

### Densification

### EXEMPLES 11-15

Les granulés de silice dopés au fluor obtenus selon les exemples 1 à 5 sont densifiés à 1450°C dans un four à tube en alumine sous balayage d'hélium dans un creuset identique à celui utilisé lors de la fluoration. Le programme de chauffe est le suivant :
- chauffage libre jusqu'à 1100°C
- 140°C/h de 1100°C à 1300°C
- 85°C/h de 1300°C à 1400°C
- 50°C/h de 1400°C à 1450°C
- 1450°C pendant 15 minutes
- refroidissement jusqu'à une température de 200°C et sortie du four pour refroidissement à température ambiante.

Après l'opération, on obtient une poudre de grains denses de silice dopée au fluor, qui peut être utilisée pour la fabrication de préformes de fibre optique. La teneur en fluor est déterminée par dosage par ionométrie après mise en solution par frittage alcalin. Les résultats sont portés dans le tableau 2.

**Tableau 2 : Densification**

| Exemple | Teneur en F dans les granulés [ppm] | Teneur en F dans les grains [ppm] |
|---|---|---|
| 11 | 19500 | 3980 |
| 12 | 11000 | 5240 |
| 13 | 9800 | 3880 |
| 14 | 13500 | 3730 |
| 15 | 11400 | 4400 |

Les résultats mettent en évidence que le procédé selon l'invention permet un dopage de la silice synthétique par le fluor à basse température. La poudre de grains denses de silice obtenue présente une teneur en fluor pouvant aller jusqu'à 5000 ppm de fluor après densification.

Ce procédé diminue la corrosion observée lors du dopage de la silice par du fluor à l'aide de composés gazeux et assure une répartition homogène du fluor dans les grains denses de silice. Ainsi, le procédé permet l'obtention d'une plus faible variation d'indice dans une préforme pour fibres optiques comparée à la méthode antérieure de fluoration en creuset.

## Revendications

1. Procédé de fabrication d'une poudre de silice dopée au fluor et destinée à la réalisation de préformes de fibre optique, **caractérisé par le fait que** :
- on mélange avec un composé fluoré solide des granulés de silice ayant une surface spécifique supérieure à 30 m²/g ;
- on effectue une décomposition thermique dudit composé fluoré solide ;
- on effectue une densification des granulés de silice dopés obtenus, pour aboutir à des grains de silice dopés.

2. Procédé selon la revendication 1, dans lequel le composé fluoré solide est le bifluorure d'ammonium.

3. Procédé selon l'une des revendications précédentes, dans lequel la température de décomposition dudit composé fluoré solide est inférieure ou égale à 600°C.

4. Procédé selon la revendication 3, dans lequel ladite température de décomposition est inférieure ou égale à 425°C.

5. Procédé selon l'une des revendications précédentes, dans lequel le mélange de granulés de silice et de composé fluoré solide contient de 1 à 30% de composé fluoré solide.

6. Procédé selon la revendication 5, dans lequel ledit mélange de granulés de silice et de composé fluoré solide contient de 2 à 12% de composé fluoré solide.

7. Procédé selon l'une des revendications précédentes, dans lequel on maintient le mélange à la température de décomposition thermique pendant une durée de 15 à 60 minutes.

8. Procédé selon l'une des revendications précédentes, **caractérisé par le fait que** la densification est effectuée sous atmosphère inerte.

9. Procédé selon l'une des revendications précédentes, dans lequel la décomposition thermique est conduite dans un four vertical ou dans un four horizontal rotatif.

10. Procédé selon l'une des revendications précédentes, **caractérisé en ce qu'**il est continu.

## Claims

1. Method of producing a powder of silica doped with fluorine and intended for the manufacture of optical fibre preforms, **characterised in that**:
- granules of silica having a specific surface area of more than 30 m²/g are mixed with a solid fluorinated compound;
- thermal decomposition of said solid fluorinated compound is performed;
- densification of the doped silica granules obtained is performed to result in doped silica grains.

2. Method according to claim 1, wherein the solid fluorinated compound is ammonium bifluoride.

3. Method according to one of the preceding claims, wherein the decomposition temperature of said solid fluorinated compound is less than or equal to 600°C.

4. Method according to claim 3, wherein said decomposition temperature is less than or equal to 425°C.

5. Method according to one of the preceding claims, wherein the mixture of silica granules and solid fluorinated compound contains from 1 to 30 % solid fluorinated compound.

6. Method according to claim 5, wherein said mixture of silica granules and solid fluorinated compound contains from 2 to 12 % solid fluorinated compound.

7. Method according to one of the preceding claims, wherein the mixture is held at the temperature of thermal decomposition for a duration of from 15 to 60 minutes.

8. Method according to one of the preceding claims, **characterised in that** the densification is performed under an inert atmosphere.

9. Method according to one of the preceding claims, wherein the thermal decomposition is carried out in a vertical oven or in a horizontal rotary oven.

10. Method according to one of the preceding claims, **characterised in that** it is continuous.

## Patentansprüche

1. Verfahren zur Herstellung eines dotierten SiliciumdioxidPulvers, das zur Bildung von Vorformen einer optischen Faser bestimmt ist, **dadurch gekennzeichnet, dass**
- man Siliciumdioxid-Granulat mit einer spezifischen Oberfläche von über 30 m²/g mit einer festen fluorierten Verbindung mischt;
- man eine thermische Zersetzung der festen fluorierten Verbindung durchführt;
- man eine Verdichtung des erhaltenen dotierten Siliciumdioxid-Granulats durchführt, um dotierte Siliciumdioxidkörner zu erhalten.

2. Verfahren nach Anspruch 1, wobei die feste fluorierte Verbindung Ammoniumbifluorid ist.

3. Verfahren nach einem der vorangehenden Ansprüche, wobei die Temperatur der Zersetzung der festen fluorierten Verbindung unter oder gleich 600°C ist.

4. Verfahren nach Anspruch 3, wobei die Temperatur der Zersetzung unter oder gleich 425°C ist.

5. Verfahren nach einem der vorangehenden Ansprüche, wobei das Gemisch des Siliciumdioxid-Granulats und der festen fluorierten Verbindung 1 bis 30% an fester fluorierter Verbindung enthält.

6. Verfahren nach Anspruch 5, wobei das Gemisch aus Siliciumdioxid-Granulat und fester fluorierter Verbindung 2 bis 12% an fester fluorierter Verbindung enthält.

7. Verfahren nach einem der vorangehenden Ansprüche, wobei man das Gemisch während einer Dauer von 15 bis 60 Minuten bei der Temperatur der thermischen Zersetzung hält.

8. Verfahren nach einem der vorangehenden Ansprüche, **dadurch gekennzeichnet , dass** die Verdichtung unter inerter Atmosphäre durchgeführt wird.

9. Verfahren nach einem der vorangehenden Ansprüche, wobei die thermische Zersetzung in einem Turmofen oder in einem horizontalen Drehofen durchgeführt wird.

10. Verfahren nach einem der vorangehenden Ansprüche, **dadurch gekennzeichnet, dass** es kontinuierlich ist.
